# EUROPEAN PATENT APPLICATION

(11) **EP 0 986 256 A1**
(43) Date of publication of application: **15.03.2000**
(21) Application number: 98941828.0
(22) Date of filing: 11.09.1998
(51) Int. Cl.: H04N 7/08

(54) **DIGITAL BROADCASTING SELECTIVE RECEIVING DEVICE AND METHOD THEREOF**

(30) Priority: 25.03.1998 JP 7703798; 21.07.1998 JP 20480298
(71) Applicant: Kabusikigaisha Dentu, Tokyo 101-8426 (JP)
(72) Inventor: AKIYAMA, Ryuhei Kabusikigaisha Dentu, Tokyo 101-8426 (JP); MAEDA, Hiroki Kabusikigaisha Dentu, Tokyo 101-8426 (JP)
(74) Representative: HOFFMANN - EITLE
(86) International application number: JP9804096
(87) International publication number: WO9949661

(57) **Abstract**

A television signal suitable for each viewer is automatically selected and received.

Individual data of the viewer are registered in advance. In a registering method, there are a method for directly registering the individual data from a code register section 107 by the viewer using a remote controller and an IC card setting said data thereto, and a method for registering said data (accumulated to a database 108) in advance to a specific agency. A proper code for selecting the television signal suitable for each viewer is determined on the basis of said registered data and is stored to a memory section 103. When the data are registered to said agency, the data are transmitted through an internet, etc. and are stored to the memory section 103. The signal suitable for the viewer is automatically selected by said stored data from plural digital television signals simultaneously transmitted.

## Description

### Technical Field

The present invention relates to automatic selection and reception in conformity with a viewer's taste from many broadcast stations in the reception of a satellite broadcast, particularly, in the reception of a satellite television broadcast.

### Background Art

Recently, a satellite broadcast using a digital wave has gradually spread in a television broadcast. In this satellite broadcast, a band of a higher frequency is used in comparison with a case in which a radio wave is transmitted in a conventional UHF or VHF band. The number of receivers in Japan has exceeded 10,000,000. The television broadcast of a ground wave using the digital wave is also performed. In accordance with this television broadcast, it is necessary for a viewer to search a broadcast in conformity with a viewer's taste from many broadcasted television programs.

In contrast to this, television broadcast using the digital wave can be transmitted by increasing an information amount in comparison with the television broadcast of the conventional UHF or VHF band (three programs can be included in the conventional frequency used to transmit one program). Accordingly, advanced utilization of a television radio wave is enabled, but no effective utilizing method in this respect has yet been developed.

However, when the above satellite broadcast and television broadcast by ground wave (hereinafter these are called a digital broadcast) using the digital wave are considered from the standpoint of a commercial broadcast, an advertisement (commercial messages) broadcasted between programs is important, needless to say the programs are also important. If the viewer selects the program that he/she wants to watch, in the case of the digital broadcast, the number of channels is increased as much as 10 times or more compared with that in the case of the ground waves so that it is not easy for the viewer to search the program in conformity with a viewer's taste. It is very inefficient to search an object program from a conventional program page of a newspaper or a television information magazine.

An idea with respect to marketing is changed from a conventional mass-marketing which treats consumers as a lump to a marketing in which an individual or a specific consumer group (hereinafter called a customer) is set to an object. Accordingly, it has been required to aim at the customer or a person whose data are stored to a specific database as an object of the advertisement. A most problematic point in these respects is that no television advertisement means for treating the customer or the database as an object has been developed so far when the advertisement aiming at customer is actually planned.

In contrast to this, a receiver for receiving the above television broadcast tends to be digitally designed. As a tendency to the next-generation television receiver, it is considered that a high image quality, a high quality, data broadcast reception and an information recording function are enabled so that high function is realized in comparison with the conventional receiver. Further, a multi-channel for receiving broadcast services such as broadcasts using a ground wave, a broadcast satellite (BS) or a communication satellite (CS) or a cable television broadcast (CATV), etc. is considered as a premise. To realize these matters, it is necessary to arrange a receiver in which the conventional receiver and a function of one portion of a personal computer are united. Such a receiver constructionally has a memory unit for greatly increasing a memory capacity and various kinds of software functions.

Such a receiver should be also called a personalized television. When such a receiver is used, a new method is adopted in techniques of the selection of a program and the advertisement.

In the technique of the advertisement, an advertisement intended for the customer is required as mentioned above. However, as a means for this advertisement, the above next-generation television receiver has a basic construction for satisfying this object and can become an effective means. Namely, it is necessary that matters as a premise of the advertisement intended for the customer are data of the above customer and its database.

In consideration of the above matters, an object of the present invention is to provide a method and a device capable of automatically receiving a program in conformity with a customer's taste from programs of many digital broadcasts, and also provide a device for adding information about an advertisement to a frequency band of a program and sorting and selecting this added information at a signal receiving time.

### Disclosure of the Invention

To solve the above problems, the invention of claim 1 relating to a digital broadcast selecting and receiving method is characterized in that a preset digital code is superposed to a transmitted television signal; said digital code is detected from said received television signal; a code proper to each viewer registered to a receiver in advance is compared with said detected digital code; and a desirable signal is received from said television signal.

To solve the above problems, the invention of claim 2 relating to the digital broadcast selecting and receiving method is characterized in that said code proper to each viewer is registered to a specific database in advance, and is a customer code to be registered to the receiver through an internet or a telephone line in the invention of claim 1.

To solve the above problems, the invention of claim 3 relating to a digital broadcast selecting receiver is characterized in that the digital broadcast selecting receiver comprises a detecting circuit for detecting a preset digital code superposed to a transmitted television signal; a memory section for storing said digital code and a code proper to each viewer registered to a receiver in advance; a comparing circuit for discriminating whether said detected digital code is in conformity with said code proper to each viewer or not; a selecting signal generating circuit for selecting the television signal to which the digital code is to be superposed when said codes are in conformity with each other; and a display section for displaying the television signal to which said selected code was superposed.

To solve the above problems, the invention of claim 4 relating to the digital broadcast selecting receiver is characterized in that, in the invention of claim 3, the memory section stores said digital code and the code proper to each registered viewer to be transmitted from a specific database through an internet or a telephone line in advance; and the comparing circuit discriminates whether or not said detected digital code is in conformity with said code proper to each viewer to be transmitted from said specific database.

To solve the above problems, the invention of claim 5 relating to the digital broadcast selecting receiver is characterized in that an automatic selecting station display unit for automatically displaying a desirable television signal in the display section is arranged in the invention of claim 3 or 4 by reserving and setting a preset digital code superposed to the transmitted television signal.

To solve the above problems, the invention of claim 6 relating to the digital broadcast selecting receiver is characterized in that a recorder for recording a desirable television signal is arranged in the invention of claim 3, 4 or 5 by reserving and setting a preset digital code superposed to the transmitted television signal.

To solve the above problems, the invention of claim 7 relating to the digital broadcast selecting receiver is characterized in that, in the invention of claim 3, 4, 5 or 6, a tuner is arranged separately from a tuner for receiving said television signal, and the digital code superposed to a transmitted broadcast is discriminated, and a broadcasting signal is automatically recorded to a memory medium mounted within the receiver in advance.

To solve the above problems, the invention of claim 8 relating to the digital broadcast selecting receiver is characterized in that said broadcasting signal recorded to the memory medium mounted in advance is regenerated as a television commercial in the invention of claim 7.

To solve the above problems, the invention of claim 9 relating to the digital broadcast selecting receiver is characterized in that, in the invention of any one of claims 3 to 8, a tuner is arranged separately from a tuner for receiving said television signal, and the digital code superposed to a transmitted program is discriminated, and the program is recorded to a memory medium mounted within the receiver in advance.

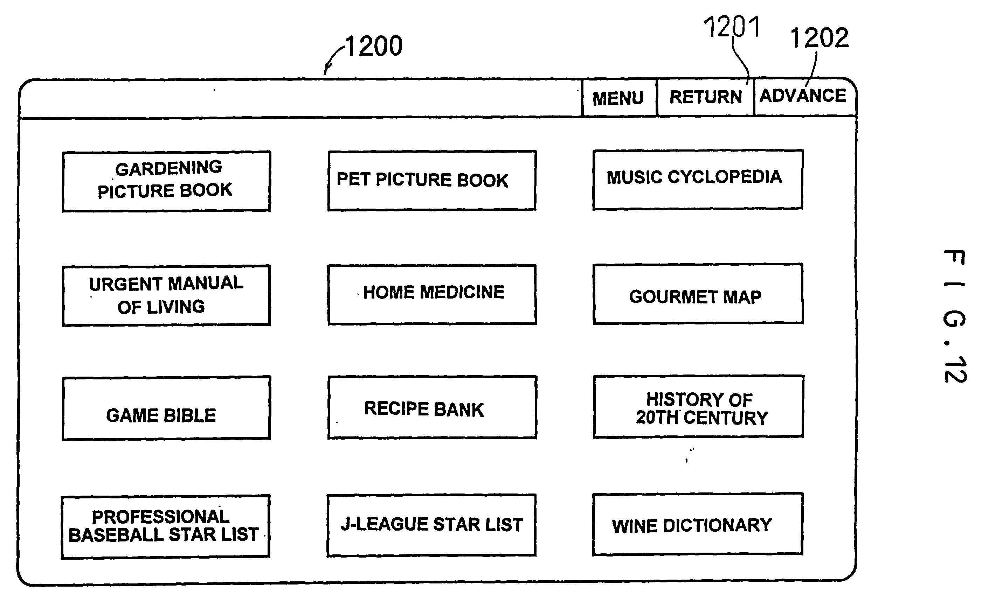

Here, the "program" includes various kinds of maps, various kinds of picture books, guides of goods, various kinds of other guides, etc., and matters illustrated in Fig. 12. Further, "record" includes a case in which the program is recorded in advance to the memory medium mounted within the receiver at a factory forwarding time, and a case in which contents of the program are rerecorded to new contents by a BS wave, a ground wave or an internet, etc.

To solve the above problems, the invention of claim 10 relating to the digital broadcast selecting receiver is characterized in that means for regenerating a program selected from programs recorded to said memory medium mounted in advance is arranged in the invention of claim 9.

In the present invention, a predetermined signal is selected from transmitted television signals by utilizing a predetermined digital code and a code proper to each viewer, and a program or an advertisement in conformity with the individual viewer is received.

Customer data for determining the code proper to each viewer are required to easily select the program by the viewer from many programs. Some cases for obtaining these data are supposed. For example, a purchaser of the next-generation television receiver inputs family characteristics (address, sex, ages, school careers, hobbies, etc.) while the purchaser talks with the television screen. The customer data are obtained by a method for selecting and receiving these data from various kinds of broadcasting programs on the basis of this input. There is also a method in which a favorite program is automatically selected and received by storing a family's taste by a learning function arranged in the receiver as the number of receiving times from many broadcasting programs is increased. Otherwise, there is also a method for reading an IC card to which the family characteristics are inputted.

### Brief Description of the Drawings

Fig. 1 is a constructional view showing one embodiment of a receiver of the present invention.
Fig. 2 is a view showing a flow chart at a register reservation time of a television program.
Fig. 3 is a view showing customer data accumulated to a database in accordance with one embodiment of the present invention.
Fig. 4 is a view showing one mode of commercial in a transmitted television signal.
Fig. 5 is a view showing one embodiment of the television commercial received in each home on the basis of the customer data.
Fig. 6 is a view showing another embodiment of the television commercial received in each home on the basis of the customer data.
Fig. 7 is a waveform diagram showing one example of a digital code superposed to the transmitted television signal.
Fig. 8 is a view showing an example of the digital code of a program and the commercial superposed to the television signal.
Fig. 9 is a constructional view showing another embodiment of the receiver of the present invention.
Fig. 10 is a constructional view showing another embodiment of the receiver of the present invention.
Fig. 11 is a constructional view showing another embodiment of the receiver of the present invention.
Fig. 12 is a view showing one embodiment of a menu screen of information stored to a memory medium of Fig. 11.

### Best mode for carrying out the Invention

Embodiments of a digital broadcast receiver and its method in accordance with the present invention will next be described on the basis of the accompanying drawings.

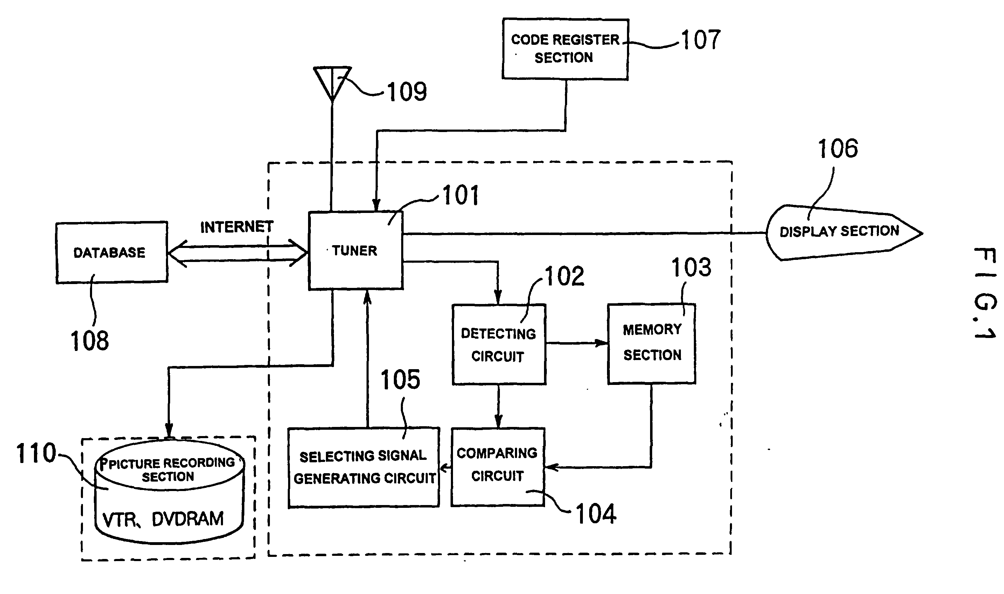

Fig. 1 is a constructional view showing one embodiment of a device for receiving a digital broadcast in the present invention.

As shown in Fig. 1, the receiver in the present invention is constructed by a tuner 101, a detecting circuit 102, a memory section 103, a comparing circuit 104, a selecting signal generating circuit 105, a display section 106, a code register section 107, a database 108, and a picture recording section 110. The tuner 101 receives a television signal. The detecting circuit 102 detects a preset digital code superposed to the television signal. The memory section 103 stores the above digital code and a code proper to a registered viewer and transmitted from a database through an internet, etc. The comparing circuit 104 compares the digital code detected by the detecting circuit 102 and the above code stored to the memory section 103. The selecting signal generating circuit 105 generates a selecting signal for selecting the television signal to which the code is superposed when the codes compared in the above comparing circuit 104 are in conformity with each other. The display section 106 displays the television signal on the screen. The code register section 107 registers the proper code of the above viewer. The database 108 accumulates and extracts the proper code of the viewer transmitted through the above internet, etc. The picture recording section 110 records a picture of the television signal to which said reserved and set digital code is superposed. The picture recording section 110 may be assembled into the receiver in the present invention and may be also constructed by a single unit separated from the receiver. A conventional VTR, a DVD RAM, or a hard disk arranged within the receiver, etc. are considered as a memory medium of the picture recording section.

The proper code of the viewer for selecting the television signal suitable for each home will next be explained.

The proper code of the viewer is determined on the basis of data registered by each viewer. There are a method for directly registering the proper code by the viewer through the above code register section 107, and a method for registering the proper code from the exterior through the internet.

When the viewer registers the proper code through the code register section 107, characteristics of each home, e.g., an address, a family construction, an age, a taste as proper data of an individual or the like are registered by using a television remote controller and an IC card in which the family characteristics are inputted. When the above IC card is used, the IC card in which the characteristics of each home are inputted and set is inserted into the code register section 107, and the above set data are registered.

As the registered data, an arbitrary item may be registered in accordance with necessity. The proper code for selecting a television signal (the kind of a commercial, etc.) suitable for that home is determined from the above registered data and is stored to the memory section 103 together with data registered by the above viewer.

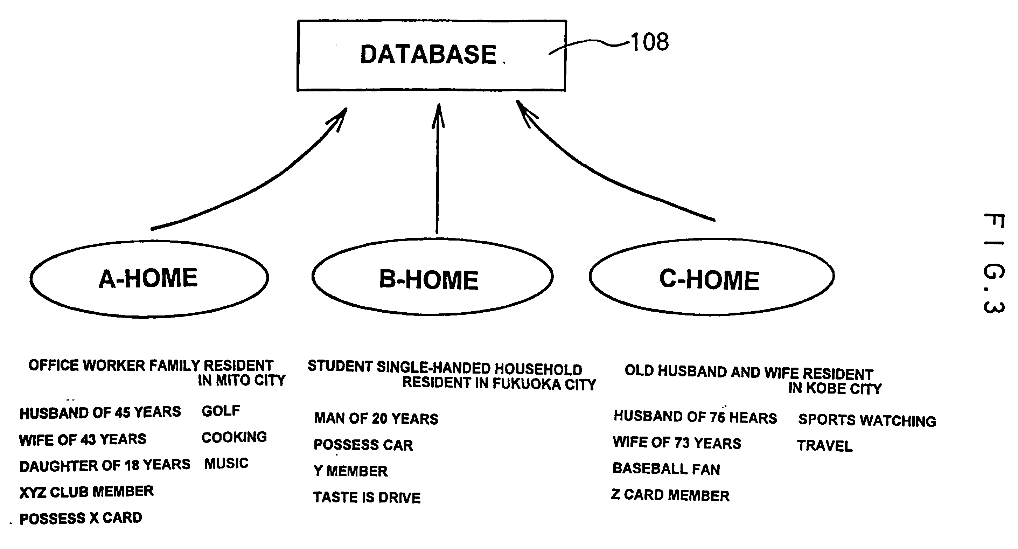

As shown in Fig. 3, when the proper code is registered through the internet, data proper to each viewer, e.g., a resident place of each home, a family construction, an age and a hobby of an individual, a club to which a member belongs, a carried card name, etc. are registered to a certain specific agency and are accumulated to the database 108 as customer data.

The above agency determines the television signal of contents suitable for each home on the basis of the register data of each home accumulated to the above database. For example, a commercial selecting signal is transmitted and set to the tuner 101 of each home through the internet such that the commercial can be selected and received from the transmitted television signal. The transmitted commercial selecting signal is stored to the memory section 103.

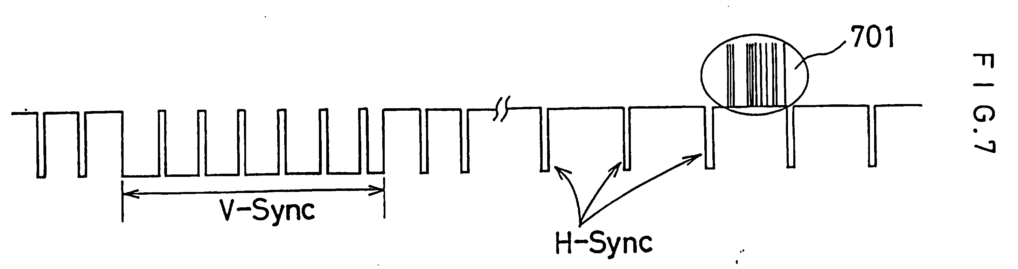

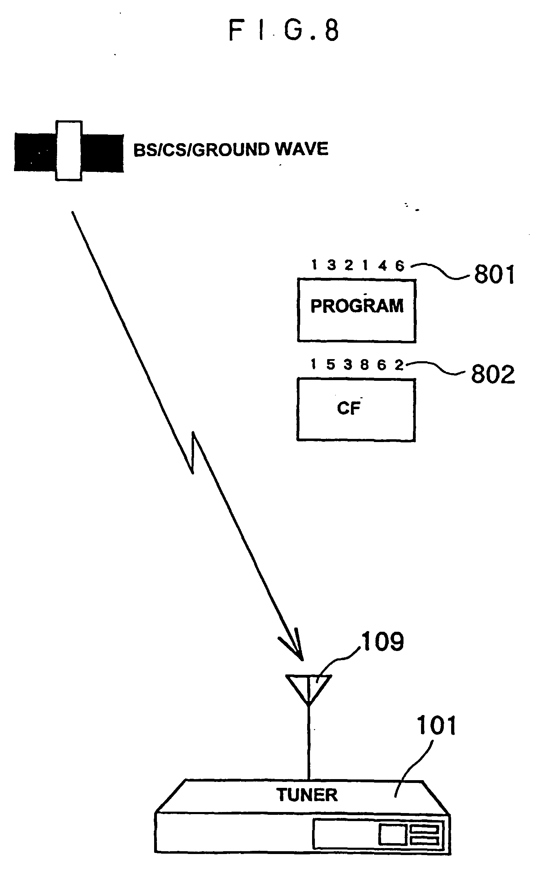

Fig. 7 is a waveform diagram showing one example of a digital code 701 superposed to the transmitted television signal. Fig. 8 is a view showing an example of the superposed digital code of a program and a commercial.

The proper code of the above viewer corresponds to the digital code superposed to a digital signal of the transmitted program and commercial and is utilized as follows. Namely, for example, a program code 801 and a commercial code 802 as shown in Fig. 8 are superposed to the transmitted digital television signal in a vertical retrace line period (a so-called blanking period) shown in Fig. 7 in advance every program and commercial. This superposed digital television signal is then transmitted.

A specific viewer code registered to the code register section 107 in advance or registered through the internet is set to the memory section 103 such that this specific viewer code corresponds to the code of the television program or the commercial. Accordingly, the comparing circuit 104 judges whether or not the preset digital code detected by the detecting circuit 102 is in conformity with the above registered specific viewer code from digital broadcasts received by an antenna 109. A conformed channel is selected and is displayed in the display section 106.

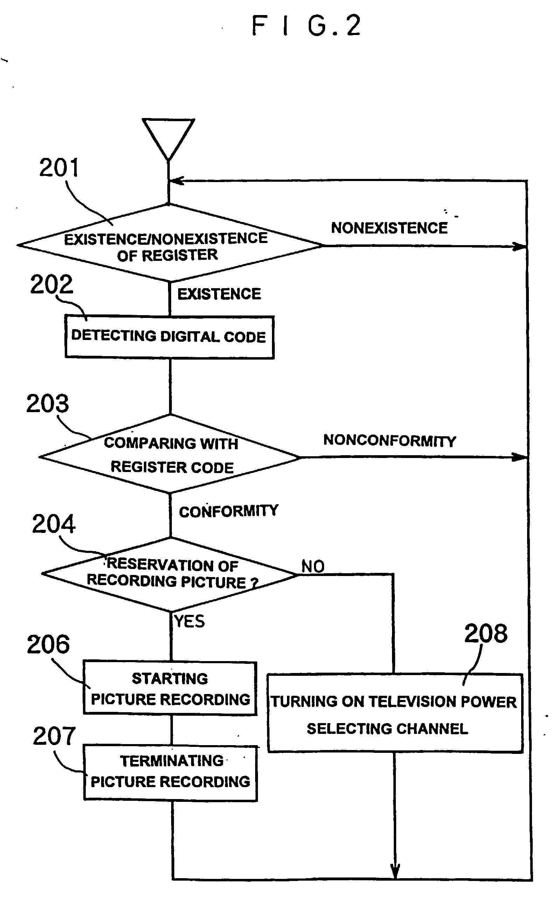

An operating method from selection of the television program to its picture recording will next be explained in accordance with Fig. 2.

In a step 201, it is judged whether a reservation of the television program is registered in the code register section 107 or not. When the reservation is registered, a digital code superposed to a television signal is detected in a step 202. In a step 203, it is judged whether the detected digital code is in conformity with a registered code or not. When the detected digital code is in conformity with the registered code, it is discriminated in a step 204 whether registered contents are intended to be a picture recording reservation or not. In the case of the picture recording reservation, a picture begins to be recorded in a step 206 and the picture recording is completed in a step 207.

The register code is set every program name, set every TV-personality, or set every genre of a program, etc. No data with respect to time are included in the register code, and the picture is recorded in coincidence with a broadcasting start of the program. Accordingly, when a broadcasting time of the program to be recorded is delayed by certain circumstances, e.g., by extending the period of time of a game of a professional baseball, there is a merit in that it is not necessary for the viewer to pay attention to such circumstances.

It is also discriminated from the view point only whether the digital signal superposed to the television signal transmitted from a transmitting side coincides with. Accordingly, for example, by transmitting a set code proper to a certain TV-personality superposing a signal of a program that this TV-personality plays from the transmitting side, if the viewer once registers this code, the program that the above TV-personality plays can be automatically recorded successively.

Further, with respect to the genre of a program, if a soccer code is registered, a transmitted soccer program can be selected in station and can be recorded. If a combination of specific teams of the professional baseball is registered, a program of this combination of the baseball teams can be automatically selected in station and can be recorded.

In the step 204 of Fig. 2, when the register code is not a code of the picture recording reservation but a register code for displaying the broadcasted program on the television screen on the air, a channel of this program is automatically selected in station when the registered program begins to be broadcasted in a step 208. Further, when power of the television is being turned off, the television power is turned on and an image is displayed on the screen.

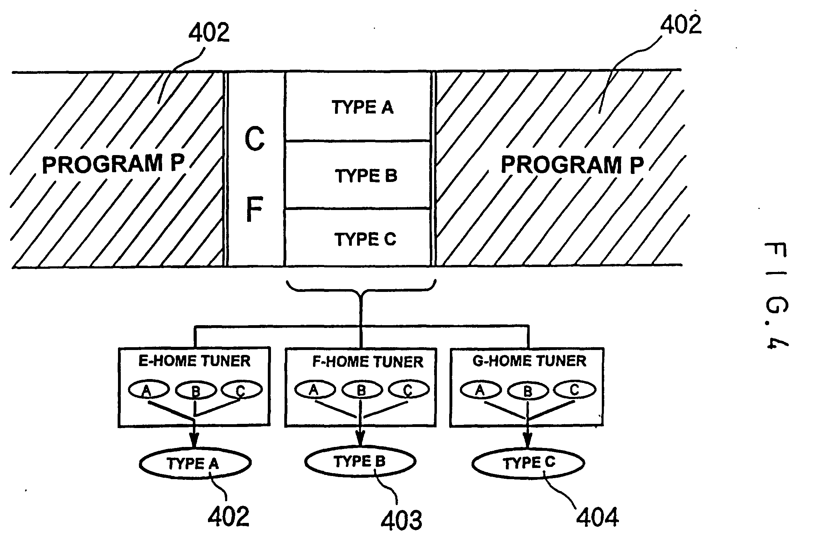

Fig. 4 is a schematic drawing showing a case where the number of transmitted commercials (advertisements including a still image and a moving image) is plural and the commercials received in each home are different from each other in accordance with register data.

For example, commercial signals of three contents of types A, B and C are simultaneously transmitted as commercial signals 401 transmitted between broadcasts of a program P402. In the transmitted commercial signals 401, picture images every field of each commercial are sequentially continuously arranged. When the same television program P is seen in E, F and G homes, a commercial selecting signal is set in advance in a receiver of each home so as to select a commercial suitable for each home from the commercials of the above three contents in accordance with registered proper data. Accordingly, the commercial of a type selected according to the above selecting signal is displayed on the television screen of each home. When the commercial of type A is selected, only a field picture image relating to the type A is extracted from the commercial signal 401 and is temporarily stored to a memory within the receiver. Interpolating processing of the picture image between fields (e.g., an estimate or a moving compensation, etc. using pixels of the same screen or screens before and after) is performed. Thereafter, the processed picture image is displayed on the television screen. The example of Fig. 4 shows a case in which the commercial selecting signals with respect to data registered in the respective homes are different from each other. The different commercials of type A 402, type B 403 and type C 404 are respectively selected in the E, F and G homes and are displayed on the television screens of the respective homes.

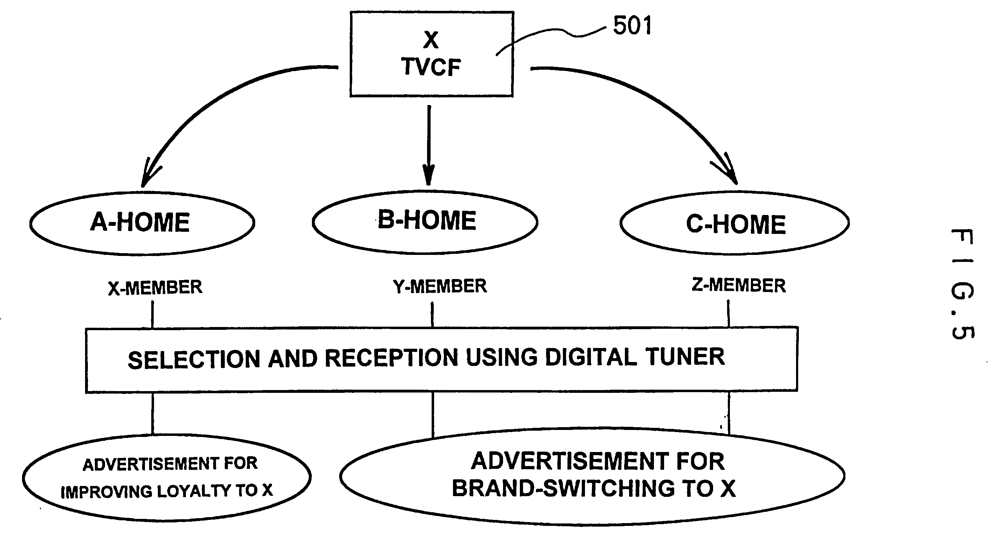

For example, Fig. 5 shows one mode of a television commercial (TVCF) of a card company.

In X television commercial 501, the kind of a received commercial is determined in accordance with a card member of a company to which each home belongs from the above proper data registered in advance. A-home being an X member receives an advertisement of contents having effects for further increasing loyalty to X card. B and C homes being not the X member (respectively members of Y and Z) receive an advertisement having effects for brand-switching these members to the X member.

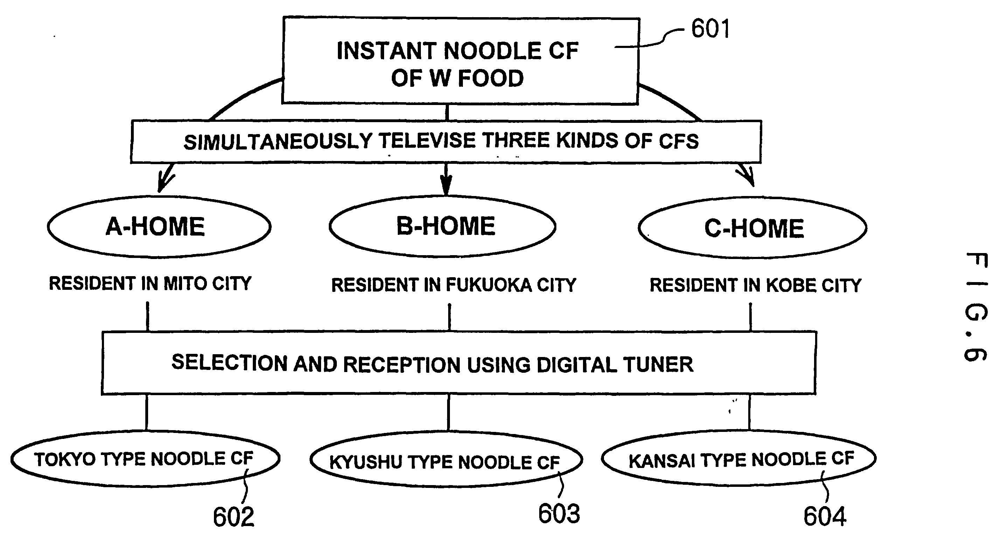

Fig. 6 shows one mode of an instant noodle commercial (CF) of a W food).

In an instant noodle commercial 601 of the W food, the kind of a received commercial is determined in accordance with an address of each home among the above proper data registered in advance. For instance, the commercial selecting signal is set in a tuner of each home such that the A-home resident in Mito city receives a commercial 602 of a Tokyo-type noodle, and the B-home resident in Fukuoka city receives a commercial 603 of a Kyushu-type noodle, and the C-home resident in Kobe city receives a commercial 604 of a Kansai-type noodle.

In the above each home, the selections of the different commercials suitable for the respective homes are done by the proper data of a viewer registered to the television of each home through the above code register section 107, and area information (which is determined by each area such as Tohoku, Kanto, Kansai, Kyushu, etc.) among customer data registered to a specific agency registered in advance from the above data base 108 through an internet. Therefore, when the viewer moves to a place different from the above area information by moving, etc. after the viewer has registered data, the area information of a moving place is automatically discriminated from the code register section 107, or a television program, etc. broadcasted in that area even when such information are not registered to the agency. That information is then set to be again automatically registered to the agency. A discriminating method of the above area information may be a method in which the tuner is installed in the television and an AM or FM wave in an area of a moving destination is tuned and the area information is discriminated from a program of this tuned wave. The discriminating method of the above area information may be also a method in which the area information is discriminated from the angle of a TV antenna at the moving destination for receiving a BS radio wave. Further, there is also a method in which an area setting button is arranged on a television side and the viewer operates this button so as to set an area at the moving destination.

When the television receiver itself has a memory medium (e.g., a memory unit having a capacity of 4 gigabytes), advertising information such as a video mail, etc. transmitted as a data broadcast by using a digital line can be stored to the above memory medium by reservation-registering a preset digital code of the above advertising information by the viewer, or by reservation-registering information selected as the advertising information suitable for each viewer through an internet on the basis of the above customer data registered in advance. The viewer can regenerate and see the above stored advertising information at a necessary time.

The advertising information transmitted as a data broadcast by using the above digital line is transmitted by a ground wave, a broadcasting satellite (BS) or a communication satellite (CS), etc. At this time, it is necessary to pay a broadcasting fee to a broadcasting station to broadcast the advertising information, but the broadcasting fee is different in accordance with an audience rating of a broadcasting program, a broadcasting time band, etc. Namely, a high broadcasting fee is required in a program of a high audience rating and a time band called a golden time. However, with respect to the advertising information stored to the memory medium arranged in the above television receiver itself and regenerated at a necessary time of the viewer, it is not necessary to broadcast the advertising information from the above broadcasting station in the time band by paying the high broadcasting fee. Such advertising information may be broadcasted by selecting a broadcasting station or a time band in which the broadcasting fee is cheap. Accordingly, a party or an enterprise, etc. broadcasting the above advertising information can broadcast much advertising information (advertising information for 10 to 20 minutes or more) at a broadcasting fee cheaper than that in a conventional television commercial.

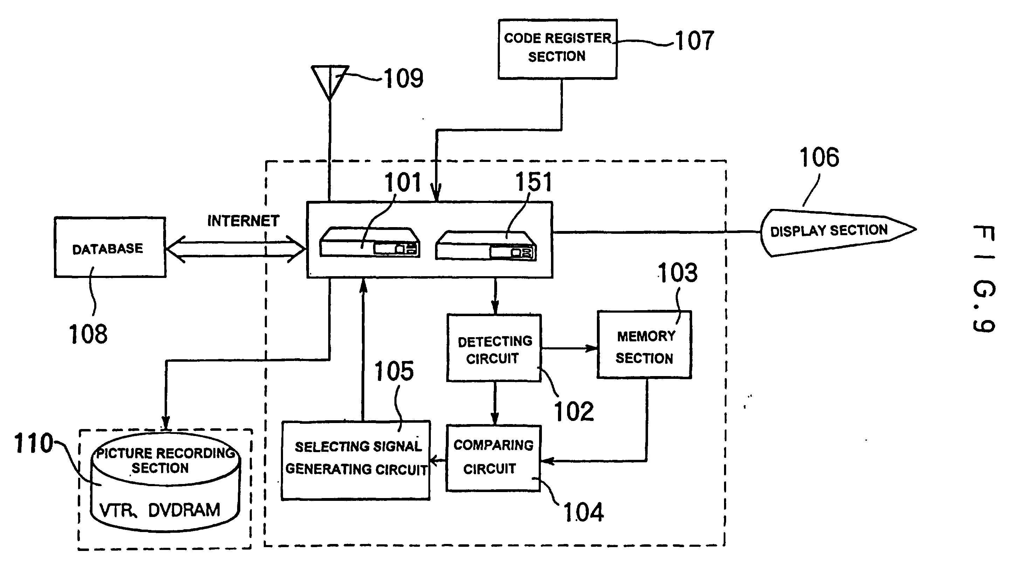

In contrast to this, as shown in Fig. 9, a tuner 151 for common use having interchangeability with respect to the above ground wave and the BS or CS broadcast is arranged separately from the conventional tuner 101 on a side of the television receiver. The tuner 151 is automatically tuned at any time and the viewer reservation-registers a preset digital code in each of the above transmitted data broadcasts. Otherwise, information selected as the advertising information suitable for each viewer on the basis of the above customer data registered in advance is reservation-registered through the internet. Thus, such information can be stored to the above memory medium.

The tuner 151 may be tuned periodically instead of at any time, and may not have interchangeability with respect to all of the ground wave and the BS or CS broadcast, but may be a tuner corresponding to one or some of the above broadcasting waves.

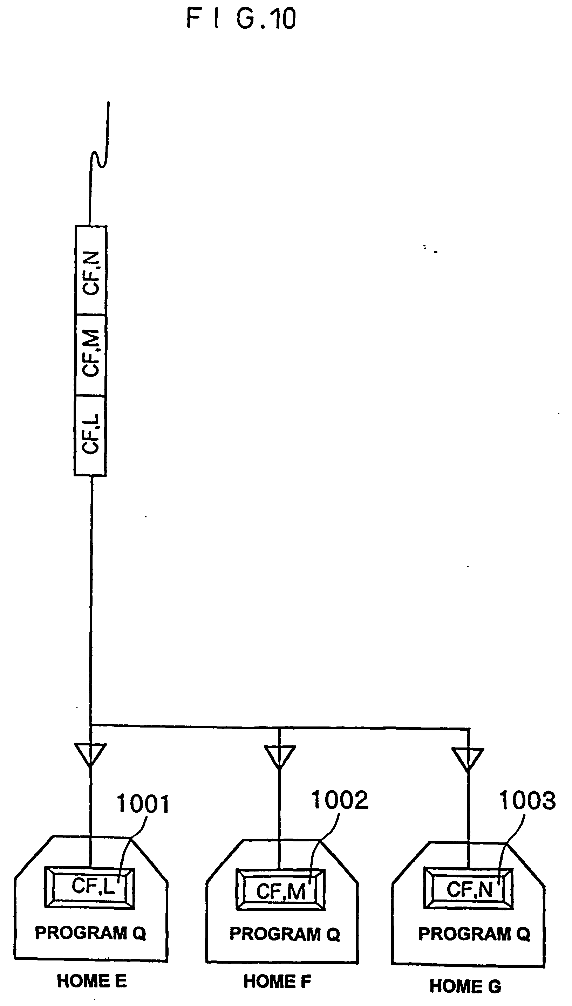

Next, Fig. 10 shows one mode in which the tuner 151 for common use having interchangeability is arranged separately from the above conventional tuner 101, and a television commercial is selected and received in advance and is stored to the memory medium mounted to the television receiver itself, and is broadcasted as the above television commercial between programs.

As shown in Fig. 10, a system for transmitting plural television commercials (CF) L, M, N as data broadcasts to each of homes E, F, G in advance can be adopted to transmit a commercial suitable for each home so as to cope with a diversified viewer's taste, an increase in kinds of commercials, a difference in commercial contents between areas, etc.

The above plural television commercials L, M, N are transmitted to each home in advance by a digital line used for the above data broadcasts. The above plural television commercials L, M, N have preset discriminating data (e.g., broadcasting starting times of the television commercials, an area code, etc.). The television commercials are selected and received in each of the homes E, F, G in accordance with data registered in advance, and are stored to memory media 1001, 1002, 1003 mounted to respective television receivers. The television commercials are televised, between television programs Q by the discriminating data preset to the above television commercials instead of a commercial (e.g., the commercial of Fig. 4) televised between conventional programs. The above commercials are stored in accordance with data set in each home. Therefore, the different television commercials L, M, N suitable for the respective homes are televised on the screens at the same commercial time in the homes E, F, G seeing the same program.

A signal stored to the above memory medium may be stored to the memory medium in advance at a factory forwarding time of a television receiver. Concretely, a map of each area of the whole country, a picture book of animals, a music cyclopedia, a list of professional baseball stars, or an introduction of goods of each enterprise body, etc. are installed to the above memory medium in a factory at the forwarding time and are sold. A viewer can select and regenerate contents that he/she wants to see by a remote controller, etc. at a necessary time. Further, when the contents stored to the memory medium at the above factory forwarding time are corrected (e.g., contents of the map, records of baseball players, new goods, etc.), a signal of new contents to be corrected is received through the above tuner 151 and the new contents are restored to the above memory medium. Otherwise, the new contents may be restored to the above memory medium through the above internet.

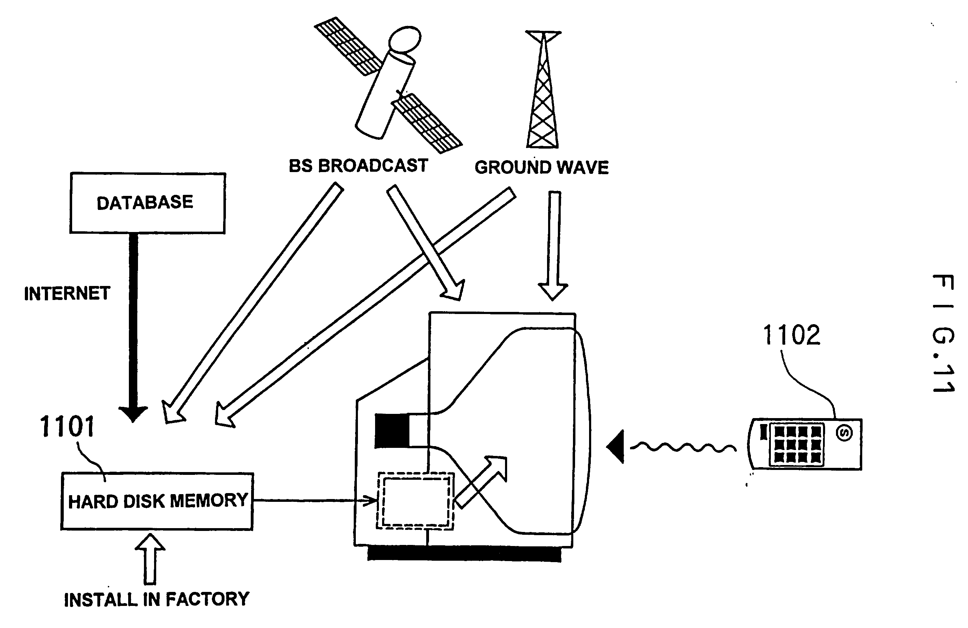

Fig. 11 shows one embodiment in which various kinds of information are stored to the memory medium mounted to the television receiver and are regenerated by operating a regenerating means.

A signal stored to a hard disk memory 1101 used as the memory medium is provided by programming various kinds of information regenerated by using an exclusive channel separately from a commercial televised between the above television programs. As mentioned above, this signal can be stored to the above memory medium in advance at the factory forwarding time of the television receiver. With respect to the information stored to the memory medium, information of new contents can be transmitted to each receiver and can be updated by using the BS broadcast or the ground wave, etc. Further, contents stored through the above internet may be updated in the above update.

Fig. 12 shows a menu screen of a program of various kinds of information stored to the above hard disk 1101.

These information can be regenerated by operating the remote controller 1102 (see Fig. 11). The menu screen 1200 is displayed on the television screen when an arbitrary button is pushed. Contents of the menu screen can be changed by selecting e.g., a return button 1201 or an advance button 1202. A button corresponding to the contents of a program that the viewer wants to see is selected so that the contents of the program stored to the hard disk memory 1101 are regenerated on the screen.

For example, when a gourmet map 1203 is selected with respect to the contents of a concrete program, a picture image for selecting a place to go is first displayed on the screen. When this place is selected, kinds of cookings such as Japanese cooking, French cooking, Thai cooking, etc. are displayed on the screen. When one of these kinds is selected, recommended restaurants are selected and displayed on a map near the above selected place. When one of the displayed restaurants is selected, a recommended menu of this restaurant, an estimated cost, etc. are displayed. In contrast to this, when a J-league star list 1204 is selected, face photographs and names of players every belonging team are displayed. When a player is selected, a career of this player or results of this player at each stage, etc. are displayed. Further, if a picture image of the interior of a showroom of an enterprise is displayed as a program, individual goods can be introduced in detail instead of a catalog of a conventional pamphlet body. Further, if a travel guide made by a travel agency can be selected, a change in pamphlet caused by changes in travel fee and condition every year can be efficiently performed in comparison with a case in which this change is performed by printing.

### Industrial Applicability

In the invention of claim 1, a customer can directly input proper data of the customer to a receiver in advance. Accordingly, only a required item can be registered and a television signal in conformity with a customer's taste can be received from many television signals.

In the invention of claim 2, an effective television commercial in each home and a program in conformity with the customer's taste can be automatically selected and displayed on the television screen since the television commercial and the program are set to each home through an internet, etc. from a specific database in which the proper data of the customer are registered.

In the invention of claim 3, a proper code registered by the customer is stored to a memory section within the receiver. Accordingly, if the customer once registers the code, it is not necessary to again register this registered code. Further, a television signal further conforming to the customer's taste can be received by changing contents of the registered code and reregistering this code again.

Further, the code can be registered by using an IC card in which the customer data are set in advance. Accordingly, a television signal suitable for the customer can be simply received only by inserting the IC card even when the receiver is changed.

In the invention of claim 4, a code transmitted from the database accumulating the customer data therein through an internet or a telephone line, etc. is stored to the memory section in the invention of claim 3. Accordingly, the transmission code is more precisely determined on a transmitting side and an optimum television signal can be received in each home.

In the invention of claim 5, when a viewer wants to watch a television broadcast on the air, a preset digital code is reserved and set in the invention of claim 3 or 4. Thus, in case the start of a program that the viewer wants to see is forgotten or the viewer sees another program, a power of the television is automatically turned on and a broadcasting station of the desired program is automatically selected since an automatic selecting station display unit is arranged. Accordingly, it is effective in prevention of from forgetting the program that the viewer wants to see.

In the invention of claim 6, a method for reserving and setting a digital code superposed to the television signal is adopted in the invention of claim 3, 4 or 5 when a television program is recorded and reserved. Accordingly, there is no factor of a reservation condition with respect to time so that there is no error in recording caused by extension or stoppage of the program. Further, since there is no factor with respect to time in the reservation condition, no time function is required in a memory unit such as a VTR, a DVD RAM, etc.

In the invention of claim 7, a tuner is mounted to a receiving side separately from a tuner for a normal television program in the invention of claim 3, 4, 5 or 6 so that a transmitted data broadcast can be freely selected at any time. Accordingly, a transmitting side of advertising information can transmit the advertising information by using a time band and a broadcasting station at a cheap broadcasting fee. Thus, more transmitters can transmit advertisements so that a viewer can obtain more advertising information. Further, since the advertising information can be stored to a memory medium mounted to the receiving side, the advertising information can be freely regenerated and seen at any time.

In the invention of claim 8, plural television commercials are transmitted to each home and are received by using a tuner separately arranged and are stored to the memory medium mounted to the television receiver in advance in accordance with data registered in each home in the invention of claim 7. Accordingly, many kinds of commercials suitable for each home can be further transmitted so that it is possible to further cope with demands of the viewer.

In the invention of claim 9, various kinds of information can be stored to the memory medium irrespective of a form of commercials broadcasted between television programs in the invention of each of claims 3 to 8. Accordingly, contents of the information can be sent to the viewer without receiving any time limit. Further, since the stored information can be updated many times, the transmitting side can provide newest information to the viewer.

In the invention of claim 10, the information of a program stored to the memory medium can be easily regenerated at any time in the invention of claim 9 so that the viewer can obtain more information and more exact information.

## Claims

1. A digital broadcast selecting and receiving method comprising the step of:
superposing a preset digital code to a transmitted television signal;
detecting said digital code from said received television signal;
comparing a code proper to each viewer registered to a receiver in advance with said detected digital code; and
receiving a desirable signal from said television signal.

2. The digital broadcast selecting and receiving method as claimed in claim 1, wherein said code proper to each viewer is registered to a specific database in advance, and is an individual code registered to the receiver through an internet or a telephone line.

3. A digital broadcast selecting receiver comprising:
a detecting circuit for detecting a preset digital code superposed to a transmitted television signal;
a memory section for storing said digital code and a code proper to each viewer registered to a receiver in advance;
a comparing circuit for discriminating whether said detected digital code is in conformity with said code proper to each viewer or not;
a selecting signal generating circuit for selecting the television signal to which the digital code is superposed when said codes are in conformity with each other; and
a display section for displaying the television signal to which said selected code is superposed.

4. The digital broadcast selecting receiver as claimed in claim 3, wherein the memory section stores said digital code and the code proper to each viewer transmitted from a specific database through an internet or a telephone line in advance; and
the comparing circuit discriminates whether or not said detected digital code is in conformity with said code proper to each viewer transmitted from said specific database.

5. The digital broadcast selecting receiver as claimed in claim 3 or 4, wherein an automatic selecting station display unit for automatically displaying a desirable television signal in the display section is arranged by reserving and setting a preset digital code superposed to the transmitted television signal.

6. The digital broadcast selecting receiver as claimed in any one of claims 3, 4 and 5, wherein a recorder for automatically recording a desirable television signal is arranged by reserving and setting a preset digital code superposed to the transmitted television signal.

7. The digital broadcast selecting receiver as claimed in any one of claims 3, 4, 5 and 6, wherein a tuner is arranged separately from a tuner for receiving said television signal, and the digital code superposed to a transmitted broadcast is discriminated, and a broadcasting signal is automatically recorded to a memory medium mounted within the receiver in advance.

8. The digital broadcast selecting receiver as claimed in claim 7, wherein said broadcasting signal recorded to the memory medium mounted in advance is regenerated as a television commercial.

9. The digital broadcast selecting receiver as claimed in any one of claims 3 to 8, wherein a tuner is arranged separately from a tuner for receiving said television signal, and the digital code superposed to a transmitted program is discriminated, and the program is recorded to a memory medium mounted within the receiver in advance.

10. The digital broadcast selecting receiver as claimed in claim 9, wherein means for regenerating a program selected from programs recorded to said memory medium mounted in advance is arranged.
